# EUROPÄISCHE PATENTANMELDUNG

(11) **EP 1 674 955 A1**
(43) Veröffentlichungstag der Anmeldung: **28.06.2006**
(21) Anmeldenummer: 04030640.9
(22) Anmeldetag: 23.12.2004
(51) Int. Cl.: G05B 19/042

(54) **Verfahren und Vorrichtung zur Überwachung der Funktionsweise eines Automatisierungssystems einer technischen Anlage**

(71) Anmelder: SIEMENS AKTIENGESELLSCHAFT, 80333 München (DE)
(72) Erfinder: Kleyer, Dieter, 91074 Herzogenaurach (DE); Ott, Wolfgang, 91083 Baiersdorf (DE)

(57) **Zusammenfassung**

Die Erfindung betrifft ein Verfahren zur Überwachung der Funktionsweise eines mindestens einen Hauptprozessor (4) umfassenden Automatisierungssystems (2) einer technischen Anlage, deren Anlagenteile anhand einer aus einer Anzahl von Programmmodulen (PM1 bis PMn) aufgebauten und auf dem Hauptprozessor (4) implementierten Anwendersoftware (6) überwacht und gesteuert-werden, wobei dem Hauptprozessor (4) ein Co-Prozessor (8) zugeordnet wird und vom Hauptprozessor (4) an den Co-Prozessor (8) eine Nachricht (N1) übertragen wird, anhand der bei Empfang durch den Co-Prozessor (8) eine Überwachungszeit (t1 bis tn) gestartet wird, wobei die Überwachungszeit (t1 bis tn) bei Erhalt einer nachfolgenden Nachricht (N2) vor Ablauf der Überwachungszeit (t1 bis tn) rückgesetzt wird, anderenfalls mit Ablauf der Überwachungszeit (t1 bis tn) ein Fehler identifiziert wird.

## Beschreibung

Die Erfindung betrifft ein Verfahren und eine Vorrichtung zur Überwachung und Prüfung der Funktionsweise eines einen Hauptprozessor umfassenden Automatisierungssystems einer technischen Anlage, insbesondere einer Kraftwerksanlage.

Bei der Automatisierung von Kraftwerksanlagen wird zunehmend anstelle einer klassischen speicherprogrammierbaren Steuerung (kurz SPS genannt) ein herkömmlicher Personalcomputer (auch PC-basiertes Automatisierungssystem genannt) verwendet. Die herkömmliche speicherprogrammierbare Steuerung besitzt eine feste Verdrahtung unabhängig von der jeweiligen Steuerungsaufgabe, die durch ein Programm an die zu steuernde Anlage angepasst wird. Im Gegensatz hierzu gibt es als eine alternative speicherprogrammierbare Steuerung verbindungsprogrammierte Steuerungen, die jedoch bei jeder Änderung im Steuerungsablauf hardwareseitig umgebaut werden müssen.

Moderne PC-basierte Automatisierungssysteme umfassen als Personalcomputer ausgebildete Automatisierungsgeräte mit einer Basissoftware. Derartige PC-basierte Automatisierungssysteme nehmen aufgrund der einfachen Erstellung von System- und Anwendersoftware auf Basis von modernen Programmiersprachen an Bedeutung zu. Die Basissoftware besteht dabei im Allgemeinen aus einem Echtzeitbetriebssystem und spezifischen Programmmodulen (auch "Bausteine" genannt), die Automatisierungsfunktionen wie Steuerungen, Regelungen, UND-/Oder-Funktion, Addierer und sonstige Verknüpfungsglieder nachbilden. Üblicherweise ist auch noch ein Kommunikationsprogramm zur Kommunikation mehrerer Automatisierungsgeräte untereinander und/oder mit externen Datenverarbeitungseinheiten, wie mit einem Programmiergerät, vorgesehen. Ein PC-basiertes Automatisierungsgerät arbeitet dabei wie eine herkömmliche speicherprogrammierbare Steuerung nach dem so genannten EVA-Prinzip (EVA = Eingabe, Verarbeitung, Ausgabe).

Der Nachteil eines PC-basierten Automatisierungssystems besteht in der nicht ausreichenden Verfügbarkeit. Während SPSbasierte Automatisierungssysteme gemäß vorgegebener Verfügbarkeitsanforderungen beispielsweise ein stoßfreies Umschalten im Millisekunden-Bereich ermöglichen, liegt diese durch die Überwachung mittels einer so genannte Watch-Dog-Funktion bei einem PC-basierten Automatisierungssystem im Sekunden-Bereich. Das Erkennen eines Fehlers und ein daraus resultierendes Umschalten eines fehlerhaften Automatisierungsgeräts auf ein fehlerfreies Automatisierungsgerät unterliegt vorgegebenen Anforderungen an die Sicherheit und die Zuverlässigkeit des Automatisierungssystems zur Prozessführung und Prozess-überwachung der technischen Anlage. Um ein PC-basiertes Automatisierungssystem auch für sicherheitsrelevante Systeme in einer Kraftwerksanlage einsetzen zu können, ist eine schnelle und sichere Fehlererkennung und daraus resultierend ein möglichst stoßfreies Umschalten im laufenden Betrieb Voraussetzung.

Der Erfindung liegt daher die Aufgabe zugrunde, ein Verfahren und eine Vorrichtung zur Überwachung der Funktionsweise eines insbesondere PC-basierten Automatisierungssystems anzugeben, welche eine schnelle und sichere Fehlerüberwachung und -erkennung ermöglicht.

Hinsichtlich des Verfahrens wird die Aufgabe erfindungsgemäß gelöst durch die Merkmale des Anspruchs 1. Bezogen auf die Vorrichtung wird die Aufgabe erfindungsgemäß gelöst durch die Merkmale des unabhängigen Anspruchs 9.

Vorteilhafte Weiterbildungen der Erfindung sind Gegenstand der Unteransprüche.

Erfindungsgemäß werden beim Verfahren zur Überwachung der Funktionsweise eines mindestens einen Hauptprozessor umfassenden Automatisierungssystems einer technischen Anlage deren Anlagenteile anhand einer aus einer Anzahl von Programmmodulen aufgebauten und auf dem Hauptprozessor implementierten Anwendersoftware überwacht und gesteuert, wobei dem Hauptprozessor ein Co-Prozessor zugeordnet und vom Hauptprozessor an den Co-Prozessor eine Nachricht übertragen wird, anhand der bei Empfang durch den Co-Prozessor eine Überwachungszeit gestartet wird, wobei die Überwachungszeit bei Erhalt einer nachfolgenden Nachricht rückgesetzt wird, anderenfalls mit Ablauf der Überwachungszeit ein Fehler identifiziert wird.

Die Erfindung geht dabei von der Überlegung aus, dass für eine besonders einfache und schnelle Überwachung sowie Erkennung von Fehlern, z. B. von Software- und/oder Hardwarefehler des Hauptprozessors, diese separat und unabhängig von der Zykluszeit des Hauptprozessors durchgeführt werden sollte. Hierzu ist die Verwendung eines Co-Prozessors vorgesehen, der bei Einsatz eines herkömmlichen Standard-PCs als Automatisierungsgerät in einem hochverfügbaren Automatisierungssystem die Verfügbarkeit des Standard-PCs erhöht, indem Fehler schnell und sicher identifiziert werden.

Für eine Erkennung von Fehlern im Millisekunden-Bereich wird zweckmäßigerweise die Nachricht zur Fehlerüberwachung und -erkennung an den Co-Prozessor bei Aufruf eines der Programmmodule des Hauptprozessors gesendet. Zusätzlich oder alternativ kann die Nachricht an den Co-Prozessor bei Ablauf eines der Programmmodule gesendet werden. Somit erfolgt die Fehlererkennung und -überwachung modulbezogen und unabhängig von der Gesamtbearbeitungszeit oder Gesamtzykluszeit des Hauptprozessors. Dabei setzt das PC-basierte Automatisierungssystem auf Funktionsbausteine auf, die in Form von Software-Modulen oder Unterprogrammen Teilfunktionen oder Funktionen der Automatisierung erfüllen. Üblicherweise werden diese wiederum von übergeordneten Organisations- oder Programmbausteinen aufgerufen. Der Aufbau dieser Bausteine oder Programmmodule, z. B. der Funktionsbausteine, der Organisationsbausteine, der Programmbausteine, erfolgt aus einer Laufzeitumgebung, z. B. einem Laufzeit-Container oder einer Automatisierungsfunktion, welche wiederum vom Betriebssystem oder einer Aufgabenverwaltung (auch Taskverwaltung oder Taskmanager genannt) gestartet werden. Durch Überwachung der einzelnen Programmmodule mittels bei Aufruf oder bei Ablauf des jeweiligen Programmmoduls gesendeter Nachrichten an den Co-Prozessor ist sichergestellt, dass einzelne Programmmodule sowohl auf Software- als auch auf Hardwarefehler geprüft und analysiert werden.

Alternativ oder zusätzlich zur modulbezogenen Fehlerüberwachung und -erkennung kann die Nachricht zyklisch, z. B. in diskreten Zeitabständen, an den Co-Prozessor gesendet werden. Dies ermöglicht die Überwachung auch einer Gruppe von Programmmodulen anhand deren Gesamtbearbeitungszeit. Hierzu wird die Überwachungszeit zweckmäßigerweise korrespondierend zur Gesamtbearbeitungszeit eingestellt.

In einer weiteren Ausführungsform wird mindestens ein Grenzwert für die Überwachungszeit vorgegeben. Dies ermöglicht beispielsweise eine Überwachung von Grenzbereichen für die Bearbeitungszeit einzelner oder mehrerer Programmmodule. Liegt beispielsweise eine Laufzeit unterhalb eines plausiblen Grenzwerts und somit innerhalb der vorgegebenen zulässigen Grenzen, so wird von einer fehlerfreien Bearbeitung des oder der betreffenden Programmmodule ausgegangen. Wird beispielsweise eine erste vorgegebene Grenze überschritten und eine zweite vorgegebene Grenze unterschritten, so kann aufgrund des Bereichs eine entsprechende Fehleranalyse, z. B. auf einen Hardwarefehler, wie einen Speicherfehler, ausgeführt werden. Darüber hinaus können weitere Kriterien und/oder Bedingungen zur Überwachung und Erkennung von Fehlern vorgegeben und bei der Prüfung der Überwachungszeit und deren Analyse berücksichtigt werden.

Alternativ oder zusätzlich kann bei Ablauf der Überwachungszeit und somit bei Identifizierung eines Fehlers mindestens ein Fehleranalyseprogramm aktiviert werden. Grundsätzlich kann ein Fehler, welcher einen Zeitüberlauf zur Folge hat, sowohl durch einen Hardwarefehler (z. B. CPU-Fehler) oder durch einen Softwarefehler (z. B. Endlosschleife in der Bearbeitung eines Programmmoduls) verursacht sein. Für eine genaue und sichere Fehlererkennung kann beispielsweise als Fehleranalyseprogramm ein Analyseprogramm zur Prüfung des Hauptprozessors, zur Prüfung des Speichers, zur Prüfung der Datenübertragungseinheit, zur Prüfung einer Schnittstelle und/oder zur Prüfung von Hardward-Ein- und/oder Hardware-Ausgängen gestartet werden. Somit können einzelne fehlerhafte Komponenten oder Programmmodule identifiziert und ausgetauscht oder deaktiviert werden. Auch kann je nach Vorgabe die Fehleranalyse in Stufen erfolgen. Beispielsweise kann das Automatisierungssystem in einer ersten Analyse auf Hardwarefehler und bei Nicht-Vorliegen eines Hardwarefehlers auf einen Softwarefehler oder umgekehrt geprüft werden.

In einer weiteren Ausführungsform wird der Co-Prozessor vorzugsweise mittels des Hauptprozessors anhand eines Watch-Dog-Signals, welches die Verfügbarkeit des Co-Prozessors prüft, überwacht. Durch Überwachung des Co-Prozessors wird vorzugsweise auch die Schnittstelle zwischen Co-Prozessor und Hauptprozessor überwacht.

Die Vorrichtung zur Überwachung der Funktionsweise des mindestens einen Hauptprozessor umfassenden Automatisierungssystems, deren Anlagenteile anhand einer aus einer Anzahl von Programmmodulen aufgebauten und auf dem Hauptprozessor implementierten Anwendersoftware überwacht und gesteuert werden, umfasst den Hauptprozessor, der mit einem Co-Prozessor über eine Schnittstelle verbunden ist. Dabei ist über die Schnittstelle vom Hauptprozessor an den Co-Prozessor eine Nachricht übertragbar, anhand der bei Empfang durch den Co-Prozessor eine Überwachungszeit gestartet wird, wobei die Überwachungszeit bei Erhalt einer nachfolgenden Nachricht rückgesetzt wird, anderenfalls mit Ablauf der Überwachungszeit ein Fehler identifiziert wird. Die Schnittstelle ist vorzugsweise als eine PCI-Schnittstelle (PCI = Peripheral Component Interconnect), eine AGP-Schnittstelle (AGP = Accelerated Graphics Port) oder eine LAN-Schnittstelle (LAN = Local Area Network) ausgebildet. Bei der PCI-Schnittstelle handelt es sich um einen Bus-Standard zur Verbindung von Peripheriegeräten mit den Hauptprozessor. Bei der AGP-Schnittstelle handelt es sich um ein Hochgeschwindigkeits-Bussystem, mit dem Computer-Komponenten an den Hauptprozessors (= Mainboard) des Personalcomputers verbunden werden. Zur Prüfung des Ablaufs der Überwachungszeit umfasst der Co-Prozessor vorzugsweise ein Zeitmodul.

Die mit der Erfindung erzielten Vorteile bestehen insbesondere darin, dass durch die Verwendung eines separaten Co-Prozessors als Überwachungsprozessor für ein PC-basiertes Automatisierungssystem eine einfache und kostengünstige, den Sicherheits- und Verfügbarkeitsanforderungen entsprechende Fehlererkennung und Fehleranalyse ermöglicht ist. Hierdurch ist sichergestellt, dass bei Identifizierung eines Fehlers im Millisekunden-Bereich ein hinreichend schnelles Umschalten des Hauptprozessors auf einen Back-Up-Prozessor erfolgt. Dies wiederum führt zu einer besonders hohen Verfügbarkeit des PC-basierten Automatisierungssystems. Darüber hinaus ist eine mehrstufige Fehlererkennung und Fehleranalyse möglich. Zudem kann das Automatisierungssystem als PC-Ausführung auf ein beliebiges Betriebssystem aufsetzen. Insbesondere kann durch Verwendung eines PC-basierten Automatisierungssystems eine auf das Betriebssystem angepasste Anwendersoftware eingesetzt werden, wodurch sporadische Softwarefehler vermieden werden.

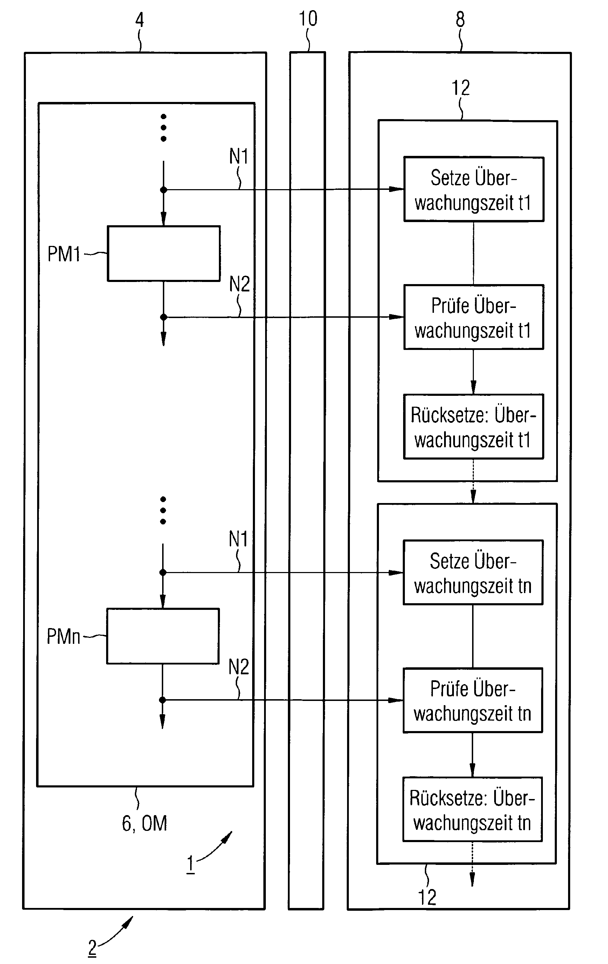

Ausführungsbeispiele der Erfindung werden anhand einer Zeichnung näher erläutert. Darin zeigt die Figur eine Vorrichtung 1 zur Überwachung der Funktionsweise eines Automatisierungssystems 2. Das Automatisierungssystem 2 dient zur Steuerung und/oder Regelung sowie Überwachung einer nicht näher dargestellten technischen Anlage, z. B. einer Kraftwerksanlage. Unter einem Automatisierungssystem 2 wird eine leittechnische Einrichtung oder eine Datenverarbeitungseinheit verstanden, die auf einem herkömmlichen Personalcomputer basiert und Aufgaben und Funktionen einer herkömmlichen speicherprogrammierbaren Steuerung erfüllt. Ein derartiges PC-basiertes Automatisierungssystem 2 umfasst ein oder mehrere PC-basierte Automatisierungsgeräte, welche der Steuerung und/oder Regelung des Anlagenprozesses dienen. Im Ausführungsbeispiel ist lediglich ein Automatisierungsgerät dargestellt. Je nach Größe und Komplexität der technischen Anlage können mehrere Automatisierungsgeräte über eine nicht näher dargestellte Datenübertragungseinheit verbunden sein.

Das Automatisierungssystem 2, insbesondere das jeweilige Automatisierungsgerät, umfasst einen Hauptprozessor 4, auf welchem eine Anwendersoftware 6 zur Steuerung und Regelung des Anlagenprozesses implementiert ist. Die Anwendersoftware 6 umfasst mehrere Programmmodule PM1 bis PMn (auch Funktionsbausteine genannt), die von einem übergeordneten Programmmodul OM (auch Organisationsbaustein genannt) zur Bearbeitung von Steuerungs- und/oder Regelungsfunktionen des Anlagenprozesses aufgerufen werden.

Zur Überwachung der Funktionsweise des Hauptprozessors 4 ist dieser mit einem zugehörigen Co-Prozessor 8 über eine Schnittstelle 10 verbunden. Die Schnittstelle 10 ist als eine PCI-Schnittstelle, AGP-Schnittstelle oder als eine LAN-Schnittstelle ausgebildet. Beim Co-Prozessor 8 handelt es sich um eine herkömmliche externe Prozessoreinheit. Der Hauptprozessor 2 ist eine herkömmliche CPU (= Central Processing Unit) eines Personalcomputers.

Bedingt durch hohe Sicherheits- und Verfügbarkeitsanforderungen bei technischen Anlagen, wie einer Kraftwerksanlage, ist diese im laufenden Betrieb auf Fehler zu untersuchen, um schnellstmöglich im Millisekunden-Bereich bei sicherheitsrelevanten Funktionen ein Back-Up-System aktivieren zu können. Mit anderen Worten: Hardware- oder Gerätefehler sowie Softwarefehler dürfen die Steuerung des Anlagenprozesses nicht beeinflussen. Dazu müssen Fehler unmittelbar nach ihrem Auftreten identifiziert und analysiert werden.

Im Betrieb des Automatisierungssystems 2 wird daher zur schnellen Fehlererkennung und -analyse bei Aufruf eines der Programmmodule PM1 bis PMn und/oder zyklisch, in vorgegebenen diskreten Zeitabständen eine Nachricht N1 an den Co-Prozessor 10 übertragen. Mit Hilfe einer Kennung kann das aufgerufene Programmmodul PM1 bis PMn eindeutig identifiziert werden.

Der Co-Prozessor 10 empfängt diese Nachricht N1 und startet bei Empfang der Nachricht N1, z. B. einer Aufrufnachricht für das betreffende Programmmodul PM1 bis PMn, eine Überwachungszeit t1 bis tn durch Aktivierung eines Zeitmoduls 12.

Mit Ablauf und Verlassen des betreffenden Programmmoduls PM1 bis PMn wird vom Hauptprozessor 4 eine weitere Nachricht N2 über den Ablauf des Programmmoduls PM1 bis PMn an den Co-Prozessor 10 gesendet, die die gestartete Überwachungszeit t1 bis tn stoppt und gegebenenfalls zurücksetzt.

Bei Empfang der Nachricht N2 innerhalb der Überwachungszeit t1 bis tn oder innerhalb von vorgegebenen Grenzen für die Überwachungszeit t1 bis tn wird diese zurückgesetzt und ein fehlerfreier Betrieb identifiziert.

Für den Fall, dass die Nachricht N2 nach Ablauf der Überwachungszeit t1 bis tn oder gar nicht empfangen wird, wird seitens des Co-Prozessors 10 ein Fehler identifiziert, da die Bearbeitungszeit des betreffenden Programmmoduls PM1 bis PMn überschritten ist. Die Überwachungszeit t1 bis tn wird in diesem Fall nicht zurückgesetzt, sondern für eine Fehleranalyse verwendet. Zudem wird der Stand-By-Personalcomputer aktiviert. Der als Master-Personalcomputer arbeitende und mit einem Fehler identifizierte Hauptprozessor 4 wird deaktiviert.

Zudem wird bei Identifizierung eines Fehlers automatisch ein Steuerungssignal S zur Umschaltung vom Hauptprozessor 4 auf einen Back-Up- oder Stand-By-Prozessor generiert. Alternativ oder zusätzlich kann ein Alarmsignal generiert und ausgegeben werden. Auch kann ein weiteres Steuerungssignal S zur Aktivierung eines Fehleranalyseprogramms generiert werden. Dabei kann durch Vorgabe von Grenzbereichen für die jeweilige Überwachungszeit t1 bis tn bei einer anschließenden Fehleranalyse eine genaue Analyse auf Hardwarefehler, z. B. Speicherfehler, oder auf Softwarefehler durchgeführt werden.

Mittels der Verwendung des Co-Prozessors 8 als Überwachungsprozessor wird ausschließlich der jeweils zum Co-Prozessor 8 gehörige Hauptprozessor 4 auf Fehler, z. B. Software- und/oder Hardwarefehler, überwacht. Dabei können mittels des aktivierten Fehleranalyseprogramms sowohl CPU-Fehler, Speicherfehler, Busfehler, Schnittstellenfehler überwacht und identifiziert werden. Mit Hilfe des jeweiligen Fehleranalyseprogramms werden die Funktionstüchtigkeit aller Komponenten des Hauptprozessors 4 und die mit diesem verbundenen Komponenten eines Personalcomputers geprüft und überwacht. Fehlerhafte Komponenten können identifiziert und anschließend ausgetauscht oder deaktiviert werden.

Bevorzugt erfolgt die Fehleranalyse mehrstufig, insbesondere zweistufig. In einer ersten Stufe wird die Hardware des Automatisierungssystems 2 geprüft und analysiert. Wird kein Fehler trotz Ablauf der Überwachungszeit t1 bis tn identifiziert, so werden anschließend die Software, d. h. die betreffenden Programmmodule PM1 bis PMn, geprüft und getestet.

Zudem können die Schnittstelle 10 und der Hauptprozessor 4 zusätzlich durch herkömmliche Überwachungsverfahren, z. B.

Watch-Dog-Verfahren, geprüft werden.

## Patentansprüche

1. Verfahren zur Überwachung der Funktionsweise eines mindestens einen Hauptprozessor (4) umfassenden Automatisierungssystems (2) einer technischen Anlage, deren Anlagenteile anhand einer aus einer Anzahl von Programmmodulen (PM1 bis PMn) aufgebauten und auf dem Hauptprozessor (4) implementierten Anwendersoftware (6) überwacht und gesteuert werden, wobei dem Hauptprozessor (4) ein Co-Prozessor (8) zugeordnet wird und vom Hauptprozessor (4) an den Co-Prozessor (8) eine Nachricht (N1) übertragen wird, anhand der bei Empfang durch den Co-Prozessor (8) eine Überwachungszeit (t1 bis tn) gestartet wird, wobei die Überwachungszeit (t1 bis tn) bei Erhalt einer nachfolgenden Nachricht (N2) vor Ablauf der Überwachungszeit (t1 bis tn) rückgesetzt wird, anderenfalls mit Ablauf der Überwachungszeit (t1 bis tn) ein Fehler identifiziert wird.

2. Verfahren nach Anspruch 1, wobei die Nachricht (N1) an den Co-Prozessor (8) bei Aufruf eines der Programmmodule (PM1 bis PMn) gesendet wird.

3. Verfahren nach Anspruch 1 oder 2, wobei die Nachricht (N2) an den Co-Prozessor (8) bei Ablauf eines der Programmmodule (PM1 bis PMn) gesendet wird.

4. Verfahren nach einem der Ansprüche 1 bis 3, wobei die Nachricht (N1, N2) zyklisch an den Co-Prozessor (8) gesendet wird.

5. Verfahren nach einem der Ansprüche 1 bis 4, wobei mindestens ein Grenzwert für die Überwachungszeit (t1 bis tn) vorgegeben wird.

6. Verfahren nach einem der Ansprüche 1 bis 5, wobei nach Ablauf der Überwachungszeit (t1 bis tn) mindestens ein Fehleranalyseprogramm aktiviert wird.

7. Verfahren nach einem der Ansprüche 1 bis 6, wobei nach Ablauf der Überwachungszeit (t1 bis tn) eine mehrstufige Fehleranalyse aktiviert wird.

8. Verfahren nach einem der Ansprüche 1 bis 7, wobei der Co-Prozessor (8) mittels des Hauptprozessors (4) anhand eines Watch-Dog-Signals überwacht wird.

9. Vorrichtung (1) zur Überwachung der Funktionsweise eines mindestens einen Hauptprozessor (4) umfassenden Automatisierungssystems (2) einer technischen Anlage, deren Anlagenteile anhand einer aus einer Anzahl von Programmmodulen (PM1 bis PMn) aufgebauten und auf dem Hauptprozessor (4) implementierten Anwendersoftware (6) überwacht und gesteuert werden, wobei der Hauptprozessor (4) mit einem Co-Prozessor (8) über eine Schnittstelle (10) verbunden ist, über die vom Hauptprozessor (4) an den Co-Prozessor (8) eine Nachricht (N1) übertragbar ist, anhand der bei Empfang durch den Co-Prozessor (8) eine Überwachungszeit (t1 bis tn) gestartet wird, wobei die Überwachungszeit (t1 bis tn) bei Erhalt einer nachfolgenden Nachricht (N2) vor Ablauf der Überwachungszeit (t1 bis tn) rückgesetzt wird, anderenfalls mit Ablauf der Überwachungszeit (t1 bis tn) ein Fehler identifiziert wird.

10. Vorrichtung nach Anspruch 9, wobei die Schnittstelle (10) eine PCI-Schnittstelle, eine AGP-Schnittstelle oder eine LAN-Schnittstelle ist.

11. Vorrichtung nach Anspruch 9 oder 10, wobei der Co-Prozessor (8) ein Zeitmodul (12) umfasst.
